# EUROPEAN PATENT APPLICATION

(11) **EP 2 708 116 A1**
(43) Date of publication of application: **19.03.2014**
(21) Application number: 13183400.4
(22) Date of filing: 06.09.2013
(51) Int. Cl.: A01K 1/035, A01K 7/02

(54) **Cage mounted watering device**

(30) Priority: 10.09.2012 US 201261699208 P; 15.03.2013 US 201313842149
(71) Applicant: Pioneer Pet Products, LLC, Cedarburg, WI 53012 (US)
(72) Inventor: Lipscomb, John M., Cedarburg, WI Wisconsin 53012 (US)
(74) Representative: Rau, Schneck & Hübner Patentanwälte Rechtsanwälte PartGmbB

(57) **Abstract**

In one embodiment, a watering assembly (30) includes a basin (38) and a bowl (36) disposed on opposite sides of a cage wall (34). The basin and the bowl are releasably coupled to one another, for example by a hook-socket (46, 48) combination. The basin includes a pump (44) that moves water along a supply conduit (40) and into the bowl. The bowl has a return conduit (74) that returns water from the bowl to the basin. A reservoir (90) is coupled to and in fluid communication with the basin so that watering assembly may provide a volume of water that is greater than the combined water-holding volume of the bowl and the basin.

## Description

### FIELD

The present invention relates generally to an animal waterer for use with an animal in a caged enclosure and more particularly to an animal enclosure cage watering device formed of an assembly that is releasably attached to a cage in which an animal is housed.

### BACKGROUND

Pets kept in cages must be provided water. Known devices for providing water to a caged pet include a water dish placed in the cage and water dispensers, e.g., such as a water bottle, attached to the side of the cage. However, these devices may result in stagnant water, and they may require removal of the device from the cage for refilling. There is a need for watering system that reduces or eliminates water stagnation, while at the same time may be replenished without complete removal from the cage.

### DRAWING DESCRIPTION

The drawings illustrate at least one preferred embodiment presently contemplated for carrying out the invention. In the drawings:

Fig. 1 is a first top perspective view of a preferred embodiment of a cage watering assembly constructed in accordance with the present invention;

Fig. 2 is a top perspective view of the cage watering assembly attached to wire grating of a generally vertically extending perforate wall of a cage or animal enclosure looking from inside the cage.

Fig. 3 is a top plan view of the cage watering assembly attached to the cage;

Fig. 4 is a second top perspective view of the cage watering assembly viewed from inside the cage;

Fig. 5 is a third top perspective view of the cage watering assembly viewed from outside the cage;

Fig. 6 is an enlarged top perspective view of a water supply basin of the cage watering assembly with a top of the basin removed to show a water holding sump of the basin in which a pump in fluid-flow communication with a water supply conduit is disposed;

Fig. 7 is an enlarged fragmentary cross sectional view of the basin showing details of a water supply replenishment dispenser of the basin that is located outside of the cage enabling a user to remove, refill and replace a water replenishment supply reservoir of the dispenser without having to remove, displace or otherwise manipulate any other part of the cage watering apparatus;

Fig. 8 is a perspective view of a cross sectional view of the entire cage watering assembly mounted to the cage;

Fig. 9 is a first photograph showing a perspective view of a preferred embodiment of the cage watering assembly with its bowl disposed inside a wire cage wall and its basin disposed outside the cage wall received in a basket attached to the cage wall supporting the basin;

Fig. 10 is a second photograph showing a close-up perspective view of the cage watering assembly from within the cage;

Fig. 11 is a third photograph of the cage watering assembly showing a hook of the bowl received in a socket of the basin, a downwardly curved water return channel extending from the bowl through an opening in a basin cover into the basin, and a water supply conduit extending from the basin through the basin cover and to the bowl;

Fig. 12 is a fourth photograph showing a perspective view of the cage watering assembly from outside the cage showing the basin received in a basket attached to the cage wall with the basket supporting the basin and holding the basin in a desired position relative to the cage wall;

Fig. 13 is a fifth photograph showing a side elevation view of the cage watering assembly attached to the cage wall; and

Fig. 14 is a sixth photograph showing a top plan view of the cage watering assembly attached to the cage wall.

Before explaining embodiments of the invention in detail, it is to be understood that the invention is not limited in its application to the details of construction and the arrangement of the components set forth in the following description and illustrated in the drawings. The invention is capable of other embodiments or being practiced or carried out in various ways. Also, it is to be understood that the phraseology and terminology employed herein is for the purpose of description and should not be regarded as limiting.

### DETAILED DESCRIPTION

The present invention is directed to cage mounted watering device that is a watering assembly 30 for use with mammals, reptiles and amphibians kept in a cage 32 formed of a plurality of perforate cage walls with the cage watering assembly 30 being removably attached to one of the walls 34. The cage watering assembly 30 has an animal watering bowl 36 disposed within the cage 32 on one side of the cage wall 34 and has a water supply basin 38 outside of the cage 32 on the other side of the cage wall 34. The water supply basin 38 is in fluid flow communication with the watering bowl 36 enabling water from the basin 38 to be delivered to the bowl 36 to fill, refill and/or maintain a desired level of water in the bowl 36. The bowl 36 also is in fluid flow communication with the basin 38 enabling water to flow from the bowl 36 back into the basin 38.

A preferred embodiment of a cage watering assembly 30 shown in the drawing figures is constructed and arranged to recirculate water between the basin 38 and the bowl 36. Water from the basin 38 outside the cage 32 is delivered via a supply liquid-conveying conduit 40 extending through an opening in the perforate cage wall 34 to the bowl 36 inside the cage 32. Water flows from the bowl 36 back into the basin 38 via a return liquid-conveying conduit 42. A pump 44 disposed in the basin 38 expels water from the basin 38 through the supply conduit 40 into the bowl 36 where it fills up the bowl 36 until it reaches a level within the bowl 36 where water in the bowl 36 flows through the return conduit 42 back into the basin 38. Although not shown, a removable filter can be disposed in the basin 38 upstream of the pump 44 and downstream of the return conduit 42 to filter water from the bowl 36 returning to the basin 38 before it is pumped by the pump 44 back to the bowl 36.

The bowl 36 and basin 38 are coupled together on opposite sides of the perforate cage wall 34 in a manner that permits at least one of them to move relative to another one of them. In one embodiment, the bowl 36 and basin 38 releasably hook together with one of the bowl 36 and the basin 38 having a plurality of spaced apart hooks 46 that releasably engage the other one of the bowl 36 and the basin 38 during attachment to the cage wall 34. In the preferred embodiment shown in the drawing figures, the bowl 36 has a pair of spaced apart hooks 46 each received in a corresponding hook socket 48 formed in the basin 38 defining a hinged attachment arrangement, e.g., hinge, which hingably hooks the bowl 36 to the basin 38 in a manner permitting at least some pivotable relative movement therebetween. Each hook 46 has a downturned end or barb (not shown) received in a corresponding socket 48 of the basin 38 that also permits the bowl 36 to be moved slightly upwardly relative to the basin 38 when the bowl 36 is hooked to the basin 38.

The basin 38 has a generally upwardly extending rear wall 50 that extends alongside the cage wall 34 and alongside a generally upwardly extending rear wall 52 of the bowl 36 that also extends alongside the same cage wall 34. The rear wall 52 of the bowl 36 has a pair of spaced apart hooks 46 that extend outwardly through an opening in the perforate cage wall 34 that each has a downwardly extending end or barb (not shown) received in a socket 48 carried by the rear wall 50 of the basin 38 that can be integrally formed of the basin 38. Each socket 48 is a generally rectangular pocket carried by the rear basin wall 50. When the bowl 36 is attached by its hooks 46 to the basin 38, the rear bowl wall 52 is supported by the cage wall 34 by lying against the cage wall 34 such that the bowl 36 cantilevers outwardly therefrom.

The supply conduit 40 extends from the basin 38 through the perforate cage wall 34 to the bowl 36 so a discharge outlet 54 at one end of the conduit 40 delivers water from the basin 38 on one side of the cage wall 34 to the bowl 36 on the other side of the cage wall 34. The discharge end of the conduit 40 is supported by the bowl 36 in a manner that permits the conduit 40 to move relative to the bowl 36 in response to bowl movement, including movement of the bowl 36 relative to the basin 38 and/or the cage wall 34. Permitting relative movement between the supply conduit 40 and bowl 36 by allowing the conduit 40 to move axially relative to the bowl 36 maintains water delivery to the bowl 36 even when the bowl 36 has been bumped, jostled or otherwise slightly displaced by an animal (not shown) in the cage 32. It also advantageously accommodates bumps, angle changes, and the like that can occur when the cage 32 is picked up and moved while still being able to maintain delivery of water to the bowl 36 through the conduit 40.

The supply conduit 40 is carried by the rear wall 52 of the bowl 36 in a manner permitting relative movement therebetween. In the preferred embodiment shown in the drawings, the conduit 40 preferably is releasably received in a seat 56 carried by or integrally formed of the rear bowl wall 52. In the preferred embodiment shown in the drawings, the conduit 40 is a generally cylindrical tube 58 that is slidably received in a seat 56 carried by or integrally formed of the rear bowl wall 52 permitting the supply conduit 40 to move axially relative to the seat 56 in response to relative bowl movement. If desired, the seat 56 can be further configured to permit movement of the conduit 40 relative to the bowl 36 in a direction generally transverse to the lengthwise extent of the conduit 40.

In the preferred embodiment shown in the drawings, the supply conduit 40 is a tube 58 that releasably snaps into a conduit seat 56 that is a clip 60 having a pair of spaced apart clip arms that each extend upwardly from the top edge 79 of the rear bowl wall 52. When the conduit 40 is snapped into the clip 60, the discharge outlet 54 of the conduit 40 overlies a bottom wall 62 of the bowl 36 such that water transported through the conduit either falls from or flows out the outlet 54 into the bowl 36 where an animal in the cage 32 can drink from the bowl 36. When the conduit 40 is snapped into the clip 60, the clip 60 allows slidable relative movement therebetween to accommodate relative movement of the bowl 36.

The supply conduit 40 has its end opposite the discharge outlet 54 received in the basin 38. In the preferred embodiment shown in the drawings, the supply conduit 40 is generally L-shaped having a generally horizontal tube section 64 extending to the bowl 36 and a downturned tube section 66 extending generally downwardly through a removable basin cover 68 into the basin 38 where it is coupled to the pump 44 disposed in a water-holding sump 70 of the basin. The pump 44 preferably is a submersible pump, such as a submersible electromagnetic impeller driven electric pump that can be an aquarium pump or the like. The pump 44 preferably is mounted by one or more elastomeric suction cups (not shown) to a bottom wall 72 of the basin 38 and has an intake (not shown), such as an intake grate, formed in its outer housing in fluid-flow communication with water received in the basin sump 70. Such a pump 44 is connected to a source of electricity, such as by an electrical cord that is either connected by a multi-pronged plug to a source of utility alternating current electricity at a voltage greater than 100 volts AC or which is stepped down to a lesser voltage using a transformer or the like to a voltage that can be direct current voltage that is less than 25 volts. Such a pump 44 can also be battery powered, solar powered, or powered by a battery charged using one or more solar panels or cells attached to the cage 32.

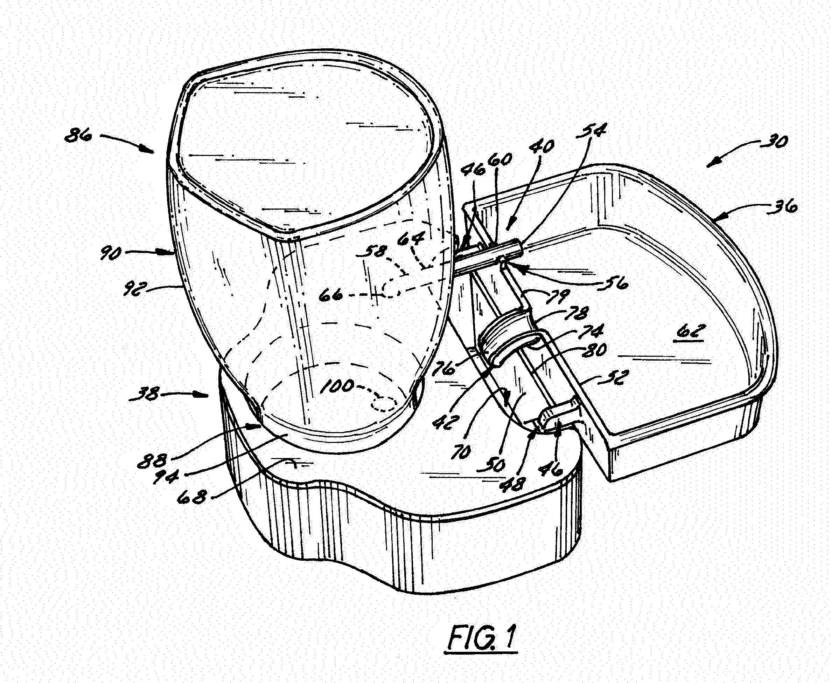

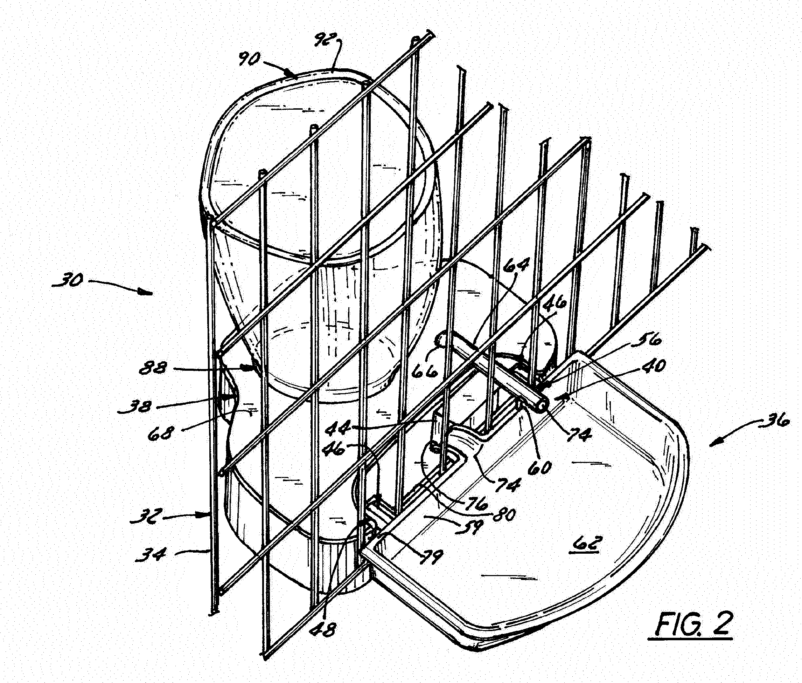

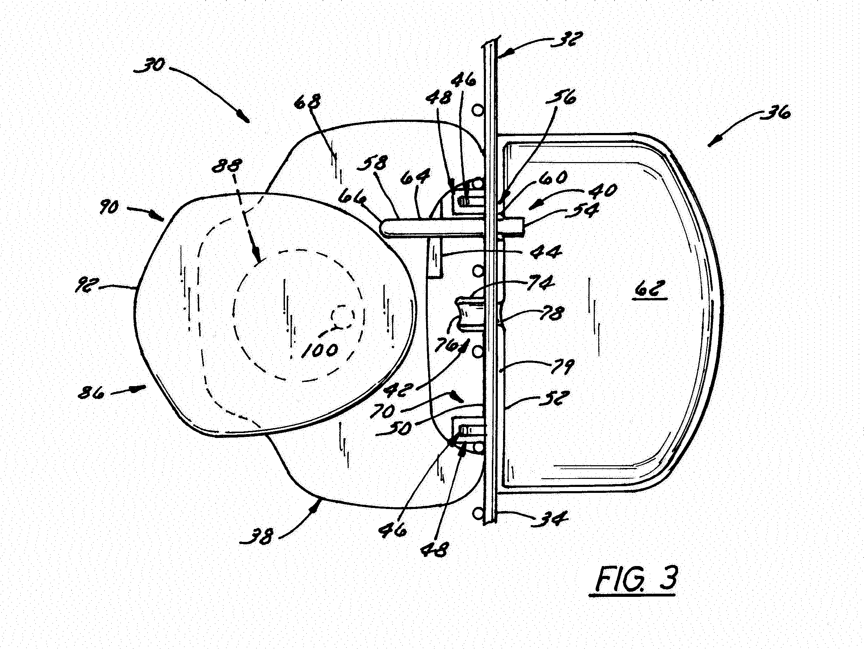

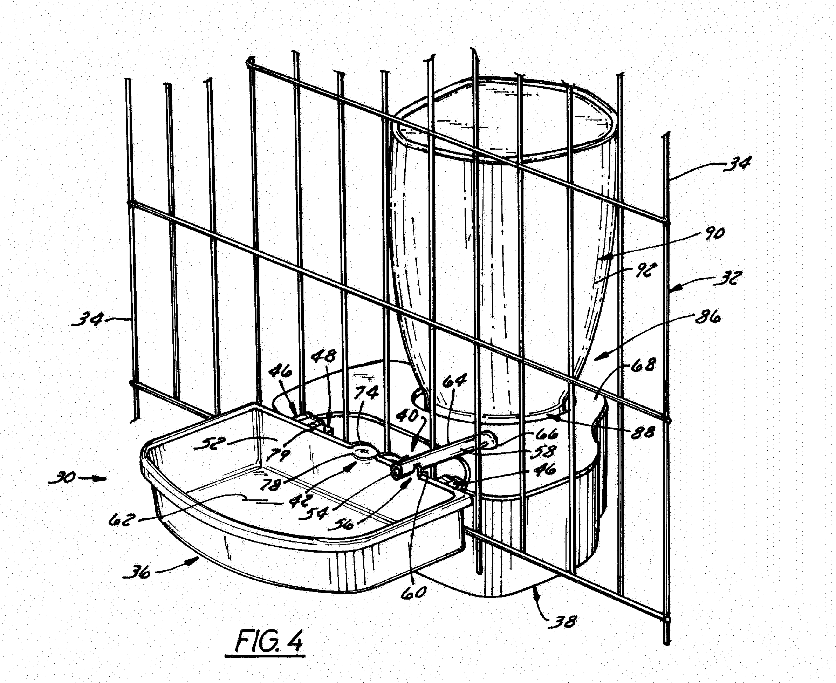

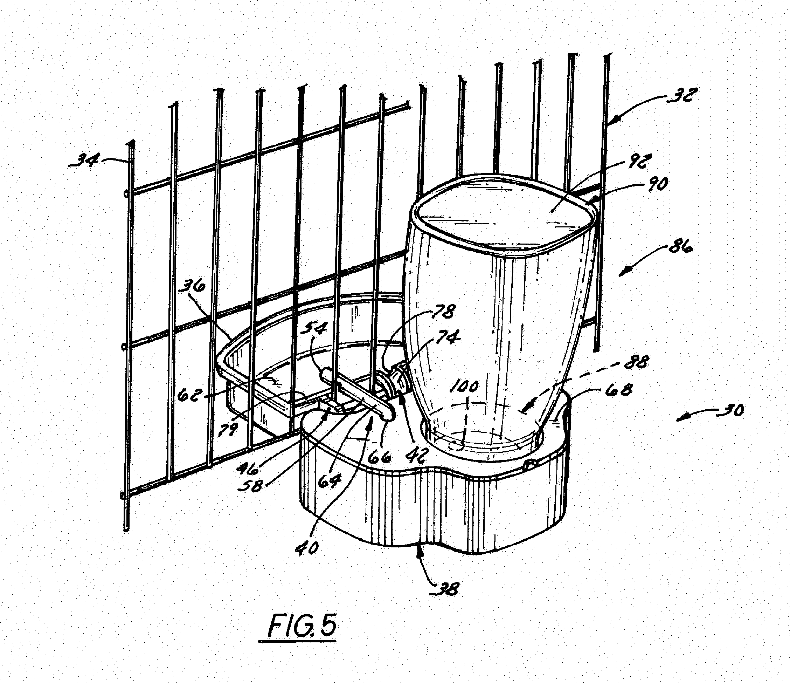

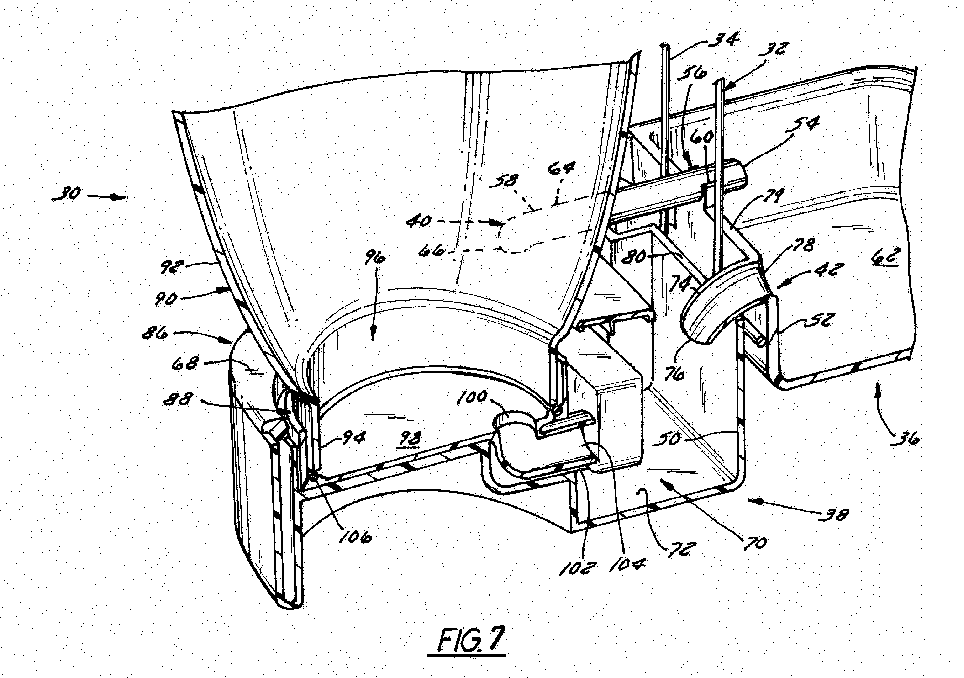

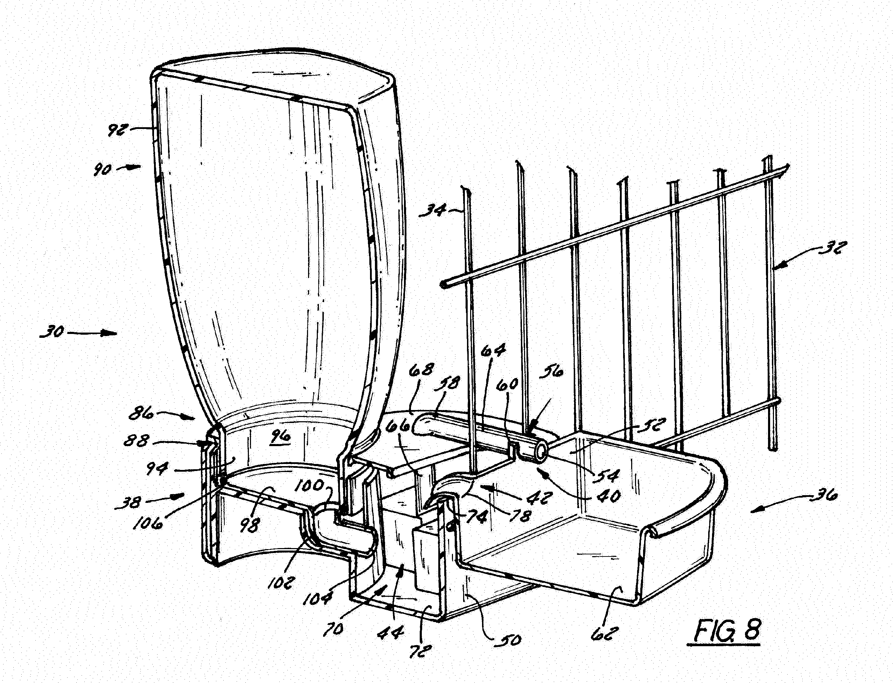

The return conduit 42 is formed by a channel 74 that extends outwardly from the bowl 36 through an opening in the perforate cage wall 34 to the basin 38 delivering water from the bowl 36 back to the basin 38 during recirculating operation of the cage watering assembly 30. The channel 74 extends outwardly from the rear bowl wall 52 through the cage wall 34 where it has a discharge outlet 76 overlying part of the basin sump 70. As is best shown in Figs. 1-5 and 7-8, the return channel 74 extends through an opening in the basin cover 68 with its discharge outlet 76 overlying the basin sump 70 so water flowing from the bowl 36 through the channel 74 into the basin 38 is deposited into the sump 70. Once deposited in the sump 70, the returned water can be drawn into the pump 44 and pumped back into the bowl 36.

The return channel 74 is elongate and overlies but is free floating relative to the basin rear wall 50 to accommodate movement of the bowl 36 relative to the basin 38 (as well as relative to the cage wall 34) while maintaining the ability to convey water from the bowl 36 to the basin 38. The channel 74 has a generally U-shaped or C-shaped transverse cross-section extending substantially from a mouth 78 formed in the rear bowl wall 52 to its discharge outlet 76 received in the basin 38. The channel 74 is curved along its longitudinal extent such that the bottom of the channel 74 can ride along the top edge 80 of the rear basin wall 50 during relative movement between the bowl 36 and basin 38. In a preferred embodiment the bottom of the channel 74 is substantially smooth and curved having a radius of curvature enabling the channel bottom to slide over the top edge 80 of the rear basin wall 50 when the bowl 36 is moved in a manner that causes the bowl 36 to pivot about the hinge created by cooperation between its hooks 46 and the corresponding socket 48 of the basin 38 in which the hook 46 is movably received.

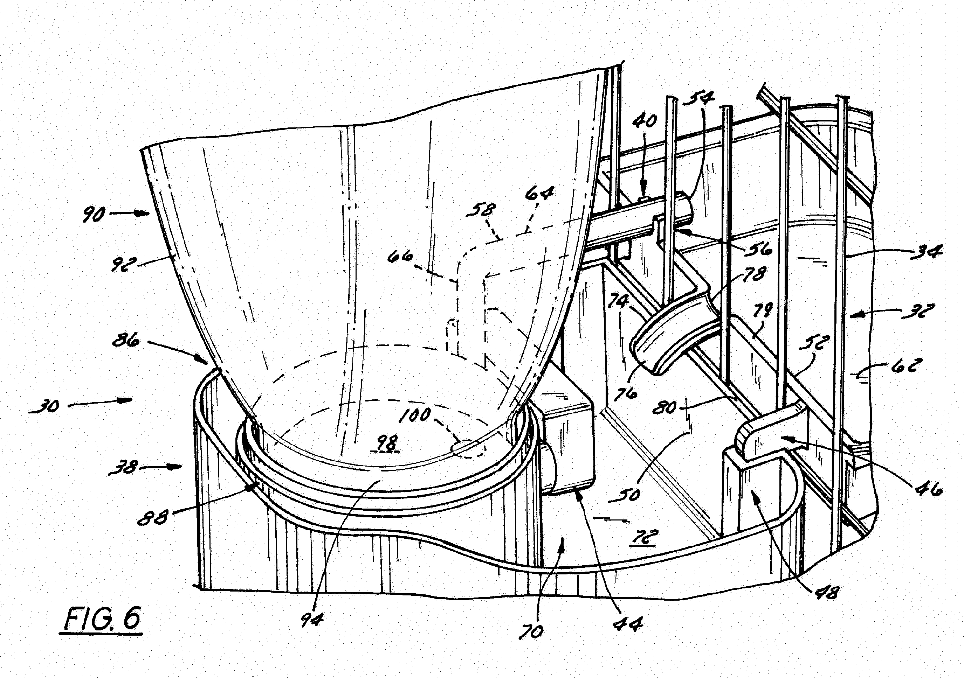

The return channel 74 can be shaped like a downwardly curved elongate tongue, such as is best shown in Figs. 1, 3, and 6-8, with its bottom smooth and curved so it can slidably ride along the top edge 80 of the basin wall 50 during movement of the bowl 36 relative to the basin 38 and/or movement of the basin 38 relative to the bowl 36 while substantially simultaneously conveying water from the bowl 36 to the basin 38. Such a movement tolerant "floating" fluid coupling keeps the discharge outlet 76 of the channel 74 below the top edge 80 of the rear basin wall 50 and no higher than flush with the top edge 80 of the basin wall 50 to maintain the fluid coupling therebetween. The return channel 74 can be integrally formed of the rear bowl wall 52 or can be configured as a separate component that is attached, such as via snap fit engagement, to the rear basin wall 50.

The bowl 36 has a bottom wall, a pair of sidewalls that extend outwardly from the rear wall, and a front wall extending between the sidewalls. The bowl can be made of plastic, such as polypropylene, polyethylene or the like, can be made of a metal, such as a stainless steel, aluminum or the like, and can also be made of a ceramic material if desired. While the bowl can have a shape different from that shown in the drawing figures, the bowl has at least a portion of it that is open to allow an animal in the cage to drink water from it.

The basin 38 has a bottom wall extending outwardly from its rear wall with the rear wall connected or being an integrally formed part of a sidewall that extends upwardly from the bottom wall about its periphery. The basin has a sump in which the pump is received and can have a filter disposed between the pump and the discharge of the return. The basin can be made of a plastic, such as polypropylene, polyethylene or the like, can be made of a metal, such as a stainless steel or aluminum, and can also be made of a ceramic material if desired.

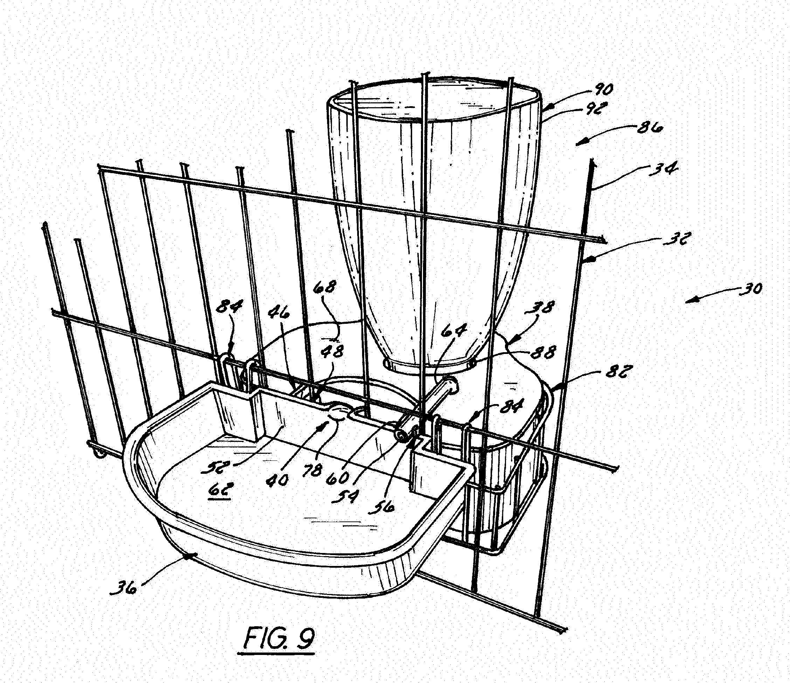

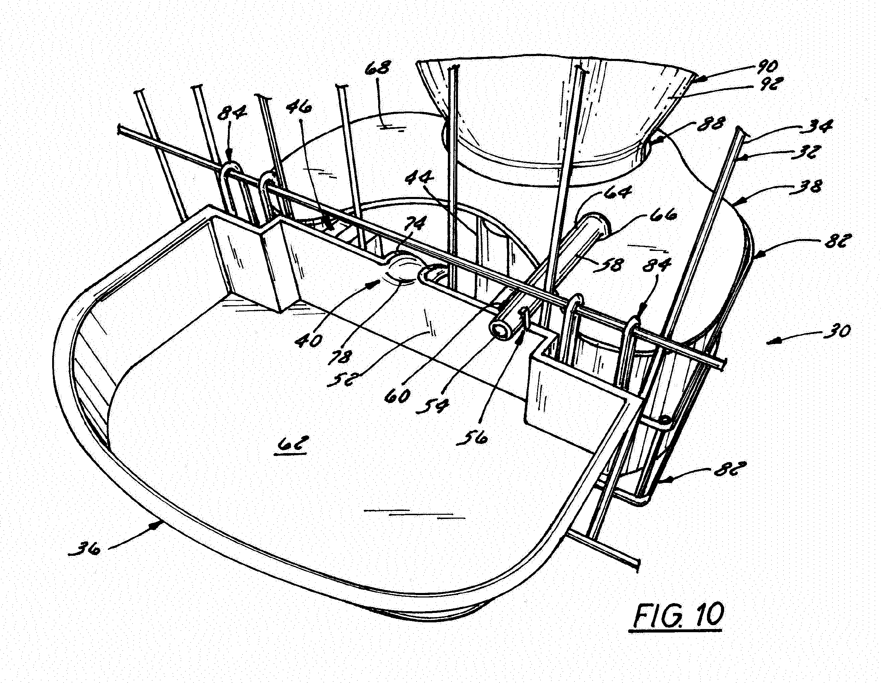

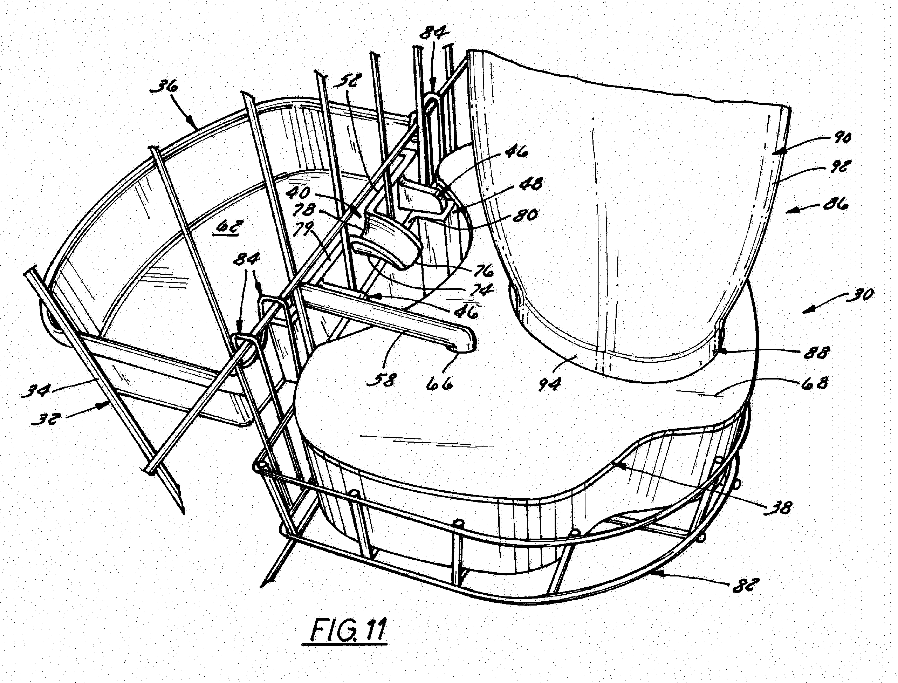

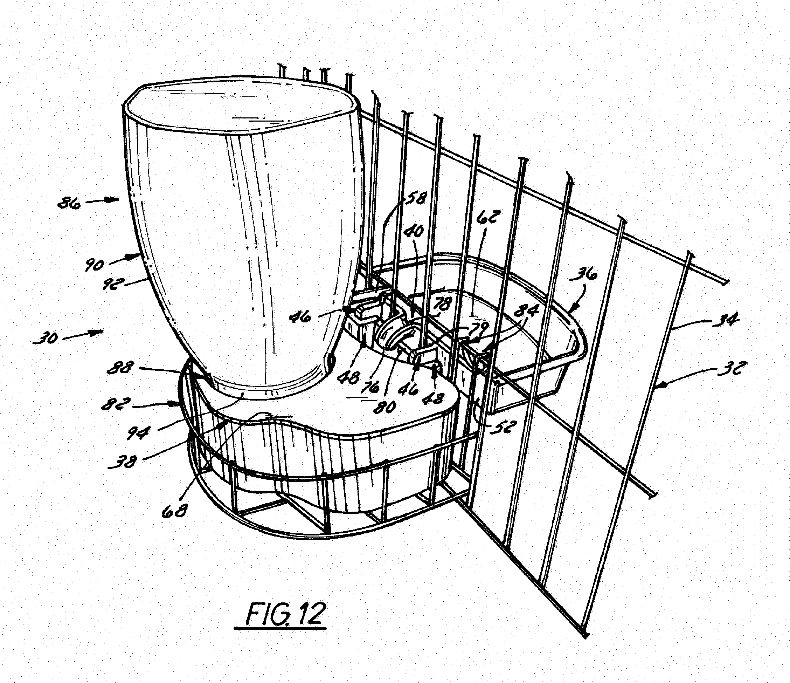

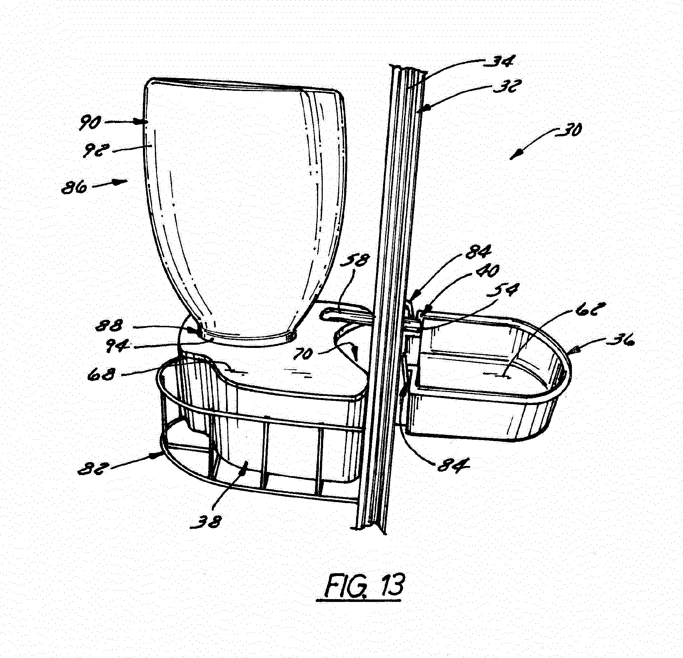

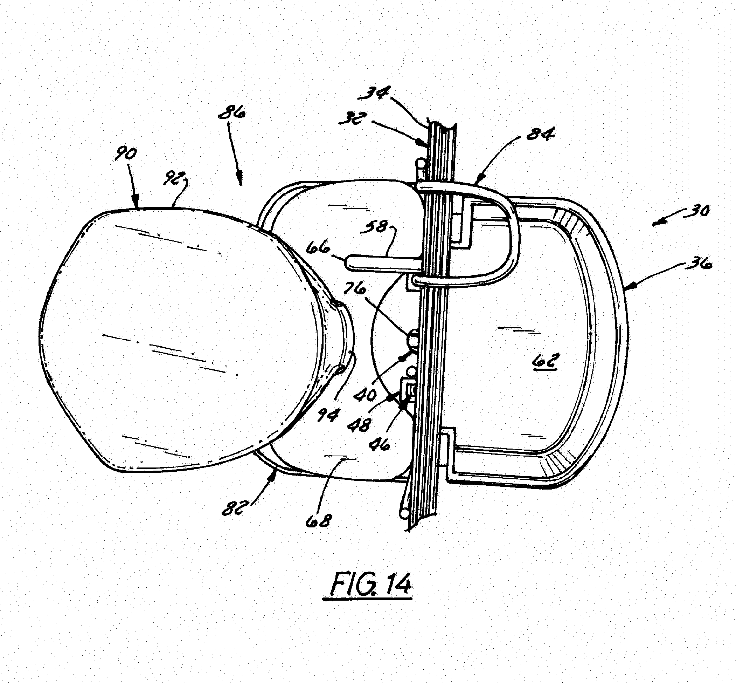

While the basin 38 can be configured to directly attach to the perforate cage wall 34, such as via hooks, the basin 38 can also be configured to be received in a mounting basket 82 that is attached to the perforate cage wall 34 via a pair of spaced apart hooks 84, such as in the manner depicted in Figs. 9-14. When mounted to the cage 32 using a mounting basket 82, its hooks 84 extend upwardly of the basket 82 engaging the cage wall 34 enabling the basket 82 and the basin 36 to be supported by the cage wall 34 by resting against part of the wall 34 cantilevering the basket 82 and basin 36 outwardly from the wall 34. When directly mounted to the cage 32, hooks of the basin 36 extend upwardly of the top of the basin cover 69 engaging the cage wall 34 enabling basin 36 to be supported against the cage wall 34 cantilevering the basin 36 outwardly from the wall 34. Other arrangements are contemplated for removably anchoring or otherwise attaching the cage watering assembly 30 to a cage 32.

The basin 38 can be configured to accommodate a supply of water greater than the combined water-holding volume of the basin sump 70 and bowl 36 to enable lost water to be replenished. In the preferred embodiment shown in the drawing figures, the basin 38 includes a water replenishment dispenser 86 with a receptacle 88 for removably receiving a water supply reservoir 90 that is a container 92 having a neck 94 configured to removably seat in the receptacle 88 in a manner that fluid-tightly couples the container 92 therewith. The container 92 can be a jar or the like made of a transparent or semi-transparent material, such as plastic or glass, which enables a user to monitor the water level in the container 92 so the user will know when it is time to remove and refill the container 92.

The water supply reservoir container 92 is inserted neck down into the receptacle 88 of the dispenser 86 enabling water to fill a dispenser chamber 96 that includes a bottom wall 98 having a dispenser drain port 100 in liquid-flow communication with a generally L-shaped dispenser conduit 102 having an outlet 104 in the basin sump 70 disposed at a desired level relative to the basin sump bottom 72 so water is gravity fed as needed from the container 92 into the sump 70 to maintain the level of water within the sump 70 at a desired water level that can be substantially the same as the level of the dispenser outlet 104. To provide a water tight seal, either the neck 94 of the container 92 or the dispenser receptacle 88 has an O-ring 106 that can be of flexible elastomeric construction. Such an O-ring 106 can be made of a natural or synthetic rubber, plastic or another suitable material that provides a fluid-tight seal.

In use, the basin 38 and bowl 36 can be filled with water before the pump 44 begins recirculating water therebetween. During pump operation, the pump 44 draws water from the basin sump 70 and delivers it through the supply conduit 40 where it is discharged into the bowl 36. As the water level rises to the level of the mouth 78 of the return conduit 42, water flows via gravity down the downwardly sloped return conduit 42 back into the basin sump 70.

Where equipped with a water supply reservoir 90 and dispenser 86, water from the water supply container 92 is drawn by gravity through the dispenser where it flows from the drain port 100 through the dispenser conduit 102 exiting from its outlet 104 into the basin sump 70 as needed to maintain a desired water level within the basin sump 70. When the water level in the water supply reservoir container 92 drops low enough or is completely exhausted, the container 92 is removed, refilled and replaced in the dispenser receptacle 88 thereby refilling the basin sump 70 and providing an excess supply of water that will replenish water consumed by an animal(s) in the cage and lost via spillage and/or evaporation extending the time required between refills.

During assembly, the basin 38 is attached to a perforate cage wall 34 such as via hooks that hook onto one of a plurality of generally horizontal wires or beams of a perforate cage wall 34. Where the basin 38 is mounted using a basket 82, the basket 82 can be attached first with its hooks 84 hooking on and over a generally horizontally extending wire or beam of the cage wall 34 before the basin 38 is place in the basket 82.

After the basin 38 is mounted, the bowl 36 is then attached to the basin 38 by inserting the end of each one of its hooks 46 into a corresponding hook receiving socket 48 of the basin 38. As the bowl 36 is being attached, the supply conduit 40 is seated in seat 56 and the return conduit 42 inserted through an opening in the perforate cage wall 34 until its outlet 76 extends into an opening in the basin cover 68 overlying the bottom 72 of the basin sump 70.

When the bowl 36 is pivotally hooked to the basin 38, the upper edge 79 of its rear wall 52 is disposed at a height higher than the upper edge 80 of the rear wall 50 of the basin 38 to give water in the bowl 36 enough potential energy so gravity will cause the water to flow downwardly from the bowl 36 through the return conduit 42 into the basin sump 70. In the preferred embodiment shown, the upper edge 79 of the rear bowl wall 52 (as well as the upper edge of the rest of the walls that extend upwardly from the basin bottom 62) is disposed at a height relative to the basin 38 so the bottom of the mouth 78 of the return conduit 42 is higher than the upper edge 80 of the rear basin wall 50 so that water reaching the mouth 78 will easily be drawn by gravity into the return conduit 42 where it flows downwardly along the downwardly curved return conduit 42 into the basin sump 70.

Water in the basin sump 70 is drawn into the pump 44 where it is pumped upwardly through the supply conduit 40 where it is discharged from the supply conduit outlet 54 at a height no lower than the upper edge 79 of the rear bowl wall 52. The water is pumped by the pump 44 upwardly through the generally vertically extending conduit branch 66 and along the generally horizontally extending conduit branch 64 to a head or height greater than the height of the top edge 79 of the rear bowl wall 52 enabling water to be filled in the bowl 36 to a height greater than the height of the top edge 80 of the rear basin wall 50. This imparts at least some water in the bowl 36 with sufficient potential energy so gravity will cause water in the bowl 36 to flow through the return conduit 42 back into the basin sump 70 without having to be pumped from the bowl 36 into the basin 38. In addition, the downwardly curved smooth bottom design of the open return conduit 42 causes it to funnel water into the basin sump 70 when the bowl 36 is bumped by an animal in the cage 32 with enough force to cause water to rush toward the rear bowl wall 52 or pivot the bowl 36 upwardly about its hooks 46 causing water to flow toward the rear wall 52. In either case, water will be funneled through the relatively wide "funnel" mouth 78 of the return conduit 42 into the basin sump 70 substantially without loss of water over the rear bowl wall 52 (such as by splashing or overflowing over the rear bowl wall 52).

Understandably, the present invention has been described above in terms of one or more preferred embodiments and methods. It is recognized that various alternatives and modifications may be made to these embodiments and methods that are within the scope of the present invention. Various alternatives are contemplated as being within the scope of the present invention. It is also to be understood that, although the foregoing description and drawings describe and illustrate in detail one or more preferred embodiments of the present invention, to those skilled in the art to which the present invention relates, the present disclosure will suggest many modifications and constructions, as well as widely differing embodiments and applications without thereby departing from the spirit and scope of the invention.

## Claims

1. A watering assembly comprising:
a bowl;
a basin that is in fluid flow communication with the bowl;
a first path for supplying water from the basin to the bowl;
a second path for returning water from the bowl to the basin; and
a pump that moves fluid along the first path.

2. The watering assembly of claim 1, wherein the bowl and basin are releasably coupled together.

3. The watering assembly of claim 2, wherein the bowl has a hook and the basin has a socket for releasably engaging the hook so as to releasably couple the bowl and the basin together.

4. The watering assembly of claim 1, wherein the first path comprises a tubular conduit with a first end coupled to the pump and a second discharge end that is supported by the bowl.

5. The watering assembly of claim 4, wherein the tubular conduit is supported by the bowl so as to permit relative movement of the tubular conduit with respect to the bowl.

6. The watering assembly of claim 5, wherein the tubular conduit is supported by a seat that permits axial movement of the tubular conduit relative to the bowl.

7. The watering assembly of claim 4, wherein the tubular conduit is generally L-shaped.

8. The watering assembly of claim 1, wherein the second path comprises an arcuate channel that extends over the basin.

9. The watering assembly of claim 8, wherein the arcuate channel has a discharge outlet that is positioned below a top edge of a rear wall of the basin.

10. The watering assembly of claim 1, further comprising a mounting basket that supports the basin.

11. The watering assembly of claim 1, further comprising a reservoir that is removably received by the basin.

12. A watering assembly comprising:
a basin having a rear wall;
a bowl having a rear wall, the bowl being positioned relative to the basin such that an upper edge of the rear wall of the bowl is higher than an upper edge of the rear wall of the basin;
a supply conduit that supplies fluid from the basin to the bowl, the supply conduit being supported by the bowl so as to allow the supply conduit to move relative to the bowl;
a return conduit for returning water from the bowl to the basin, the return conduit extending from the rear wall of the bowl and having a mouth disposed substantially higher than the upper edge of the rear wall of the basin so as to facilitate the flow of fluid from the bowl to the basin along the return conduit under the force of gravity; and
a pump that moves fluid along the supply conduit to provide fluid from the basin to the bowl.

13. The watering assembly of claim 12, further comprising:
a pair of hooks on the rear wall of the bowl;
a pair of sockets on the rear wall of the basin for receiving the pair of hooks;
wherein the bowl and the basin are positioned on opposite sides of a cage wall such that the hooks extend through the cage wall and into the sockets so as to create a cantilever force that helps to secure the basin and the bowl to the cage wall.

14. The watering assembly of claim 13, further comprising:
a reservoir received by the basin that dispenses fluid into the basin, the reservoir, bowl and basin being sized such that the watering assembly can supply a volume of water larger than the combined fluid-holding volume of the basin and the bowl.

15. A watering assembly comprising:
a basin having a rear wall;
a bowl having a rear wall, the basin and bowl being releasably coupled to one another along their respective rear walls via a fastener combination;
a supply conduit that provides fluid from the basin to the bowl, the supply conduit extending beyond the rear wall of the basin and over the bowl and being releasably supported by the bowl so as to permit the supply conduit to move relative to the bowl;
a return conduit that returns fluid from the bowl to the basin, the return conduit having a mouth that is disposed substantially above an upper edge of the rear wall of the basin and a discharge end that is disposed substantially below the upper edge of the rear wall of the basin when the basin and bowl are coupled together;
a pump in the basin that moves fluid along the supply conduit;
a reservoir that is removably received by the basin that enables the watering assembly to provide a fluid volume that is greater than the combined fluid-holding volume of the basin and the bowl.
